# EUROPÄISCHE PATENTSCHRIFT

(11) **EP 2 006 165 B1**
(45) Veröffentlichungstag und Bekanntmachung des Hinweises auf die Patenterteilung: **05.09.2012**
(21) Anmeldenummer: 07012133.0
(22) Anmeldetag: 21.06.2007
(51) Int. Cl.: B60R 21/2165, B60R 21/215

(54) **Innenraumverkleidung mit integrierter Airbagabdeckung für ein Kraftfahrzeug sowie ein Verfahren zu ihrer Herstellung**
Interior lining with integrated airbag cover for a motor vehicle and method for its manufacture
Revêtement intérieur de véhicules à moteur avec recouvrement d'airbag intégré et son procédé de fabrication

(43) Veröffentlichungstag der Anmeldung: 24.12.2008
(73) Patentinhaber: SMP Deutschland GmbH, 79268 Bötzingen (DE)
(72) Erfinder: Nogaret, Eric, 68600 Biesheim (FR)
(74) Vertreter: Modrow, Stephanie

(56) Entgegenhaltungen:
- WO-A-98/31530
- DE-A1- 19 835 612
- DE-U1- 29 811 739
- FR-A- 2 897 577
- GB-A- 2 322 341
- GB-A- 2 405 121
- US-A- 5 618 485

## Beschreibung

Die vorliegende Erfindung betrifft eine Innenraumverkleidung für Kraftfahrzeuge mit integrierter, einteiliger Airbagabdeckung nach dem Oberbegriff des Anspruchs 1 sowie ein Verfahren zur Herstellung einer solcher Innenraumverkleidung.

Aus der FR 2897577 ist eine Innenraumverkleidung gemäß Oberbegriff des Anspruchs 1 bekannt.

Aus der DE 197 01 502 C2 ist eine Instrumententafel bekannt, die eine Airbagabdeckung als separates Bauteil, das in eine Öffnung der Instrumententafel eingesetzt ist, umfasst, wobei die Airbagabdeckung mittels einer Scharnieranordnung schwingbeweglich gelagert ist und die Öffnung der Airbagklappe mittels einer kombinierten Schwenk- und Gleitbewegung der Klappe erfolgt. Bei dieser Lösung wird es als nachteilhaft angesehen, dass die Optik der Instrumententafel durch das eingesetzte Bauteil geprägt ist.

Zur Vermeidung dieses Nachteils wurden Einbauteile, insbesondere Instrumententafeln, für den Innenausbau von Kraftfahrzeugen mit integrierten Airbagabdeckungen vorgeschlagen, bei welchen der den Airbag abdeckende Bereich zusammen mit den übrigen Bereichen des entsprechenden Einbauteils als einstückiges Bauteil ausgebildet sind. Dabei ist der den Airbag abdeckende Bereich des Bauteils in der Regel durch Sollbruchstellen mit den übrigen Bereichen des Bauteils verbunden. Der entscheidende Nachteil dieser Anordnung besteht allerdings darin, dass das gesamte Bauteil aus ein und demselben Grundmaterial besteht. Da jedoch der den Airbag abdeckende Bereich besondere Anforderungen in Bezug auf Festigkeit und Elastizität erfüllen muss, damit beim Auslösen des Airbags Verletzungen der Fahrzeuginsassen vermieden werden, muss entweder somit das gesamte Bauteil aus dem gleichen hochwertigen und damit teueren Material bestehen,
oder es müssen für den Bereich der Airbagabdeckung zusätzliche Maßnahmen ergriffen werden, damit insbesondere ein Splittern dieses Teils beim Öffnen des Airbags vermieden wird.

So sind beispielsweise in der DE 199 58 865 A1 auf der dem Airbag zugewandten Seite der Trägerschicht für eine Instrumententafel Splitterschutzteile aus einem im Wesentlichen elastischen und splitterfreien Material vorgesehen, mit deren Hilfe der Deckel beim Öffnen des Airbags zusammengehalten wird. Der Deckel ist gleichzeitig über einen dehnbaren Verbindungsabschnitt mit der Kraftfahrzeugkarosserie verbunden, wodurch im Falle eines öffnen des Airbags ein Aufklappen ermöglicht wird, ohne dass der Deckel selber frei in den Fahrzeuginnenraum gelangen kann.

Diese zusätzlichen Sicherheitsmaßnahmen sind allerdings mit einem entsprechenden technischen Aufwand verbunden, was die Fertigung der Airbagabdeckung entsprechend verteuert. Ein weiterer Nachteil des einstückigen Konzepts ist, dass die erforderlichen Sollbruchlinien in der Regel in einem zusätzlichen Arbeitsschritt ausgebildet werden müssen. Dabei kommt erschwerend hinzu, dass die Sollbruchlinien, die üblicherweise auf der der Sicht abgewandten Seite der Instrumenttafel ausgebildet werden, sich durch die Trägerschicht und Schaumschicht bis hin zur Formhaut fortsetzen, wodurch sich, insbesondere bei längerer Lebenszeit der Instrumententafel die Sollbruchlinien auf der Dekorseite (Sichtseite) der Formhaut abzeichnen.

Aus der DE 199 48 021 A1 ist eine Abdeckung für einen Airbag bekannt, die in eine Instrumententafel eines Personenkraftwagens integriert ist, wobei die Instrumententafel aus einem formstabilen Trägerteil, einer geschäumten Schicht und einer Außenhaut (Formhaut) besteht, die einstückig miteinander verbunden sind. Die Airbagabdeckung selber ist als trennbarer Bereich aus einem hochfesten Material ausgebildet und in eine entsprechende Öffnung des Instrumententafelträgers eingesetzt. Dieses separate Bauteil ist zusammen mit dem Instrumententafelträger mit einer Schaumschicht und abschließend mit der sogenannten Formhaut bedeckt. Dabei ist der Airbagdeckel mit einem Fangband mit dem Instrumententafelträger fest verbunden. Da keine Sollbruchlinie in der Schaumschicht ausgebildet ist, besteht somit keine Gefahr des Abzeichnens einer solchen Linie auf der Sichtseite der Dekorfolie. Ein Nachteil dieser Anordnung besteht allerdings darin, dass das Fangband dem sich entfaltenden Airbag so gut wie keinen Widerstand entgegensetzt und die gesamte Energie des Airbags auf die Rückseite des Deckels einwirkt, der beim öffnen die Schaumschicht mitsamt der Dekorfolie (Formhaut) mit sich reißt. Bei einem derart ungehinderten und heftigen Angriff auf die Außenhaut und die Schaumschicht besteht wiederum die Gefahr, dass Splitter abgetrennt werden, die die Kraftfahrzeuginsassen verletzen können.

Der Erfindung liegt somit das Problem zugrunde, eine Innenraumverkleidung, insbesondere eine Instrumententafel, mit integrierter Airbagabdeckung zur Verfügung zu stellen, die die Nachteile des Standes der Technik nicht aufweist. Gelöst wird das Problem durch eine Innenraumverkleidung mit den Merkmalen des Anspruchs 1. Besondere Ausführungsformen der Erfindung sind in den Unteransprüchen wiedergegeben.

Es ist eine weitere Aufgabe der vorliegenden Erfindung, ein Verfahren zur Verfügung zu stellen, mit dessen Hilfe auf einfache Weise eine Innenraumverkleidung, insbesondere eine Instrumententafel, mit integrierter Airbagabdeckung hergestellt werden kann, bei der die Öffnung der Airbagabdeckung mit kontrolliertem Energieeintrag erfolgt, so dass beim Aufklappen der Airbagabdeckung Zerstörungen der Verkleidung weitgehend vermieden werden können.

Gelöst wird diese Aufgabe durch ein Verfahren mit Merkmalen des Anspruchs 15.

Das erfindungsgemäße Verfahren basiert darauf, dass die Airbagabdeckung zunächst als separates Bauteil hergestellt wird. Dies erfolgt üblicherweise über Spritzgießen. Das Verfahren ist dabei nicht auf irgendwelche besonderen oder speziellen Bauteile oder Formen beschränkt, sondern prinzipiell können nach dem erfindungsgemäßen Verfahren sämtliche Bauteile eingesetzt werden, mit denen eine Abdeckung des Airbagbereichs möglich ist.

Die Airbagabdeckung wird anschließend in eine Spritzform für ein Innenraumverkleidungsteil eingelegt und mit dem Träger für die Innenraumverkleidung umspritzt. Dabei werden Airbagabdeckung und Träger jeweils aus antagonistischen Polymermaterialien gefertigt, die keine Haftverbindung miteinander eingehen. Auf diese Weise gelingt es, die Airbagabdeckung in dem Träger für die Innenraumverkleidung als integriertes, aber separates Formteil einzulagern.

Nach Fertigstellung des Trägers für die Innenraumverkleidung mit integrierter Airbagabdeckung wird eine dem jeweiligen Verkleidungsteil entsprechende Formhaut hinterschäumt, wobei der Schaum gleichzeitig mit dem fertigen Träger für die Innenraumverkleidung mitsamt integrierter Airbagabdeckung verbunden wird. Als Formhaut können die üblichen Formhäute für Verkleidungsteile von Kraftfahrzeugen eingesetzt werden, wie z.B. über Slushverfahren hergestellte Formhäute, tiefgezogene oder vorgeformte Folien, Sprühhäute, Gießhäute etc. Dabei werden als Ausgangsmaterialien ebenfalls die in der Branche üblichen Polymermaterialien eingesetzt.

Da die Airbagabdeckung zuerst gefertigt und dann mit dem Träger umspritzt wird, sollte der Träger aus einem Material bestehen, das einen niedrigeren Schmelzpunkt hat als das Material für die Abdeckung. Als mögliche Materialien für den Träger kommen beispielsweise Polyoxymethylen (POM) und Polypropylen (PP) in Frage, während für die Airbagabdeckung Polyoxymethylen (POM), Polyethylenterephthalat (PET), Acrylnitril-Butadien-Styrol (ABS) und Polyamid (PA6) Polybutylenterephthalat (PBT), Polycabonat (PC) eingesetzt werden können. Dabei sind die Polymermaterialien sowohl für den Deckel als auch für den Träger üblicherweise mit Glasfasern verstärkt. Bei einer bevorzugten Ausführungsform des Verfahrens ist vorgesehen, dass das Material für die Airbagabdeckung Polybutylenterephthalat (PBT) oder Polyoxymethylen (POM) ist, während als Material für den Träger für die Innenraumverkleidung beispielsweise faserverstärktes Polypropylen (PP) eingesetzt wird.

Beim Umspritzen wird die Airbagabdeckung so in den Träger für die Verkleidung eingebunden, dass sie haftungsfrei mit dem Träger verbunden ist, wobei die Konturgeometrie des Deckels passgenau in korrespondierende Profile einer entsprechenden Öffnung in dem Instrumententafelträger eingreift.

Die Konturgeometrie des Deckels wird dabei so gewählt, dass eine definierte Kraft erforderlich ist, um den Deckel aus der Öffnung im Instrumententafelträger zu drücken.

Hier bieten sich nun viele Möglichkeiten, das Deckelprofil und das korrespondierende Profil der Airbagöffnung aufeinander abzustimmen. So kann beispielsweise in einer bevorzugten Ausgestaltung das Deckelprofil als Profilnase ausgebildet sein, die passgenau in eine V-förmige Profilnut in der Airbagöffnung des Trägers für die Innenverkleidung eingreift. Diese Nut kann unterbrochen sein, um das Öffnen des Deckels zu erleichtern. Insbesondere in den Eckbereichen des Airbagdeckels kann es jedoch auch vorteilhaft sein, die Haltekraft des Deckels durch eine Anpassung der Profile zu reduzieren.

Die Konturgeometrie des Airbagdeckels ist nicht nur so gewählt, dass der Öffnungskraftwiderstand kontrolliert eingestellt werden kann, sondern es können weiterhin auch Vorrichtungen vorgesehen sein, die ein definiertes Aufreißen des Schaums und der Formhaut begünstigen. So weist in einer vorteilhaften Ausgestaltung die Konturgeometrie der Airbagabdeckung einen Profilhöcker auf, der in Richtung Schaum zeigt und als Öffnungshilfe fungiert, indem er ein örtlich definiertes Aufreißen des Schaums erleichtert. Das definierte Aufreißen kann dabei durch korrespondierende Verschwächungslinien im Bereich der Formhaut optimiert werden, wodurch eine Zerstörung des Innenraumverkleidungsteils weitgehend vermieden werden kann.

Der Profilhöcker innerhalb der Konturgeometrie der Airbagabdeckung dient zusätzlich als Abdichtung beim Hinter- bzw. Umspritzen der Airbagabdeckung mit dem Träger für die Innenraumverkleidung und verhindert, dass beim Spritzvorgang Trägermaterial auf die Abdeckung gelangt.

Ein weiteres Mittel, um den Öffnungsvorgang zu optimieren, besteht in der Ausbildung einer Profilwanne im Bereich des Deckelrandes, wodurch eine Oberflächenvergrößerung des Deckels und damit eine bessere Anbindung des Schaums erreicht wird. Die bessere Anbindung des Schaums führt zu einer weiteren Reduzierung der Splitterbildung beim Öffnen des Airbags und damit zu einer verminderten Gefährdung der Insassen. Einen ähnlichen oder auch einen zusätzlichen Effekt in diese Richtung kann man auch durch eine Narbung der Oberfläche des Airbagdeckels erreichen.

Bei einer bevorzugten Ausführungsform der erfindungsgemäßen Innenraumverkleidung mit integrierter Airbagabdeckung ist die Airbagabdeckung ein separates Bauteil aus einem hochfesten, elastischen Material und umfasst einen Deckel und mindestens ein Scharnierelement. Dabei können Deckel und Scharnierelement mit einem eingelagerten textilen Gewebe, Kunststoffgewebe oder einem eingelagerten Blech verstärkt sein, wodurch das Bauteil auch bei extrem tiefen oder hohen Temperaturen zusammengehalten wird, so dass auch bei diesen Bedingungen weiterhin ein Splitterschutz besteht.

Bei einer vorteilhaften Ausführungsform kann der zusätzliche Einsatz eines Splitterschutzes vermieden werden, wenn zur Herstellung der Airbagabdeckung ein Kunststoff mit einer Nanostruktur eingesetzt wird. Derartige Materialien besitzen sowohl bei hoher als auch bei tiefer Temperatur eine außerordentliche Festigkeit und Elastizität, so dass auf den zusätzlichen Einbau von Geweben oder Blech als Splitterschutz verzichtet werden kann. Nanostrukturierte Kunststoffe zeichnen sich bis zu einer kritischen Temperatur von - 35 °C durch eine hohe Elastizität aus, während konventionelle Kunststoffe in diesen Temperaturbereichen bereits verspröden und damit zum Splittern neigen.

Das mindestens eine Scharnierelement ist bei der oben beschriebenen Ausgestaltung mit sogenannten Ankerprofilen bestückt, die formschlüssig zu korrespondierenden Haltelaschen im Träger angeordnet sind und mit diesem in einer Wirkverbindung stehen. Dabei sind die Haltelaschen als Teil des Trägers für die Innenraumverkleidung ausgeführt und dienen als Halterung und Führung für die Ankerprofile. Das Scharnierelement weist in seinem oberen Abschnitt eine Sollbruchkerbe auf, die beim Entfalten des Airbags als Drehachse für den Deckel der Airbagabdeckung fungiert und so das Aufklappen des Deckels ermöglicht.

Beim Entfalten trifft der Airbag auf die Unterseite des Deckels und schiebt die gesamte Airbagabdeckung mitsamt Scharnierelement um den Betrag, mit dem die Haltelaschen die Ankerprofile aufnehmen können, in Richtung Fahrzeuginneres. Beim Auftreffen auf den Anschlag innerhalb der Haltelaschen werden die Ankerprofile blockiert und die Hubbewegung wird in eine Drehbewegung übergeleitet, wobei die Sollbruchkerbe nun die Drehachse bildet. Die Position der Sollbruchkerbe wird über die Höhe des Deckaufbaus (Schaum und Formhaut) bestimmt und ist so ausgelegt, dass beim Auftreffen des Ankerprofils auf den Anschlag die Sollbruchkerbe auf Höhe bzw. unmittelbar über der Formhaut positioniert ist.

Die Ankerprofile absorbieren in Kombination mit den Haltelaschen beim Öffnungsvorgang einen Teil der Energie des sich entfaltenden Airbags und ermöglichen so ein kontrolliertes Öffnen des Deckels.

Bei einer bevorzugten Ausführungsform werden die Haltelaschen für die Ankerprofile jeweils durch zwei vertikal zur Oberfläche des Verkleidungsteils verlaufende Rippen gebildet, die im Träger für die Innenraumverkleidung angeordnet sind. Diese Rippen enden an dem Anschlag für das Ankerprofil, wobei sie sich in einem spitzen Winkel unter Verengung der Führung für das Ankerprofil einander leicht annähern. Dies hat den Effekt, dass beim Eindringen der Ankerprofile in die sich verengenden Haltelaschen ein Teil der Energie des sich öffnenden Airbags absorbiert wird, wodurch der Öffnungsvorgang kontrolliert und moderat gestaltet wird.

Durch eine besondere Ausgestaltung der Ankerprofile kann das Öffnungsverhalten der Airbagabdeckung weiter optimiert werden. So sind die Ankerprofile bei einer bevorzugten Ausführungsform als in Längsrichtung geteilte T-Profile ausgebildet, die zum Einen eine Führung der Ankerprofile in den Aufnahmelaschen ermöglichen und zum Anderen in einem bestimmten Ausmaß ein Zusammendrücken der beiden Flügel des Ankerprofils erlauben, was ebenfalls mit einer entsprechenden Energieabsorption verbunden ist. Auch das trägt dazu bei, das Öffnen des Deckels zu dämpfen.

Um ein zu starkes Zusammendrücken dieser Flügel der Ankerprofile zu verhindern, können zwischen den jeweiligen Teilprofilen Querrippen angeordnet sein, mit deren Hilfe der Öffnungsvorgang noch exakter eingestellt werden kann. Das Zusammendrücken der Flügel der Ankerprofile oder auch die Vorspannung zur Führung der des Deckels kann darüber hinaus über die Wandstärke des T-Profils eingestellt werden. Weitere Einstellungsmöglichkeiten der Energieabsorption sind durch die Wahl der Anzahl der Ankerprofile und des Winkels der Haltelasche gegeben.

Somit bieten sich bei dem oben geschilderten Öffnungsmechanismus eine Vielzahl von Möglichkeiten den öffnungsvorgang exakt einzustellen und kontrolliert zu gestalten. Durch die richtige Dimensionierung und Abstimmung von Ankerprofil, Haltelasche und eventuellen Verstärkungsrippen in Kombination mit einer passenden Konturgeometrie des Deckels kann überschüssige Energie beim Entfalten des Airbags absorbiert werden, was zu einer weiteren Reduzierung des Gefährdungspotentials für die Insassen führt.

Auch der Deckel selber kann unterschiedlich gestaltet sein. So ist neben einem einseitigen Öffnungsmechanismus auch eine beidseitige Variante möglich, bei der die Airbagabdeckung vorzugsweise in der Mitte eine zusätzliche Sollbruchlinie aufweist, die nach dem Anheben des Deckels bei einer bestimmten Krafteinwirkung aufbricht, so dass ein beidseitiges Öffnen der Airbagabdeckung initiiert wird. Diese Variante erfordert allerdings dann auch ein zweites Scharnierelement, um ein gleichmäßiges Aufklappen der beiden Flügel des Deckels zu ermöglichen.

Im Folgenden wird die vorliegende Erfindung anhand von Zeichnungen ausführlich erläutert.

Dabei zeigen:
Figur 1 einen Querschnitt einer Innenraumverkleidung (Instrumententafel) mit integriertem Airbagmodul;
Figur 2 eine grafische Darstellung einer Airbagabdeckung;
Figuren 3 und 3a jeweils einen Querschnitt eines Ausschnitts aus einer Innenraumverkleidung;
Figur 4 eine grafische Darstellung eines Teilausschnitts einer Innenraumverkleidung mit Airbagabdeckung;
Figuren 5a, 5b und 5c die schematische Darstellung des Öffnungsmechanismus anhand von Querschnitten durch eine Instrumententafel zu unterschiedlichen Öffnungszeitpunkten; und
Figur 6 einen Querschnitt einer Innenraumverkleidung mit einer beidseitig öffnenden Airbagabdeckung.

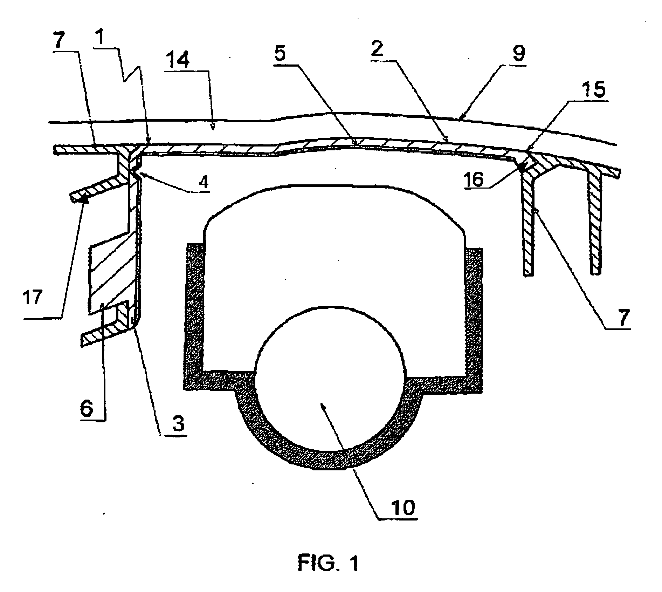

Die Fig. 1 zeigt einen Querschnitt durch eine Instrumententafel mit einem integriertem Airbagmodul. Dabei ist die Airbagabdeckung 1 mit Deckel 2 und Scharnierelement 3 sowie Splitterschutz 5 zu erkennen, die in eine entsprechende Öffnung in der Instrumententafel eingepasst ist. Das Scharnierelement 3 weist eine Sollbruchkerbe 4 sowie ein Ankerprofil 6 auf.

Die Airbagabdeckung 1 ist passgenau eingelagert in den Instrumententafelträger 7, wobei die Konturgeometrie 15 des Deckels 2 eine Profilnase 16 aufweist, die in ein korrespondierendes Hohlprofil 11 im Bereich der Öffnung des Instrumententafelträgers 7 eingelagert ist. Mit Hilfe der Konturgeometrie 15 wird der Öffnungskraftwiderstand des Deckels 2 kontrolliert und den aktuellen Erfordernissen angepasst werden. Der Instrumententafelträger 7 mit integrierter Airbagabdeckung 1 ist mit einer Schaumschicht 14 und einer Formhaut 9 abgedeckt, wobei die Formhaut 9 die Sichtseite der Instrumententafel bildet.

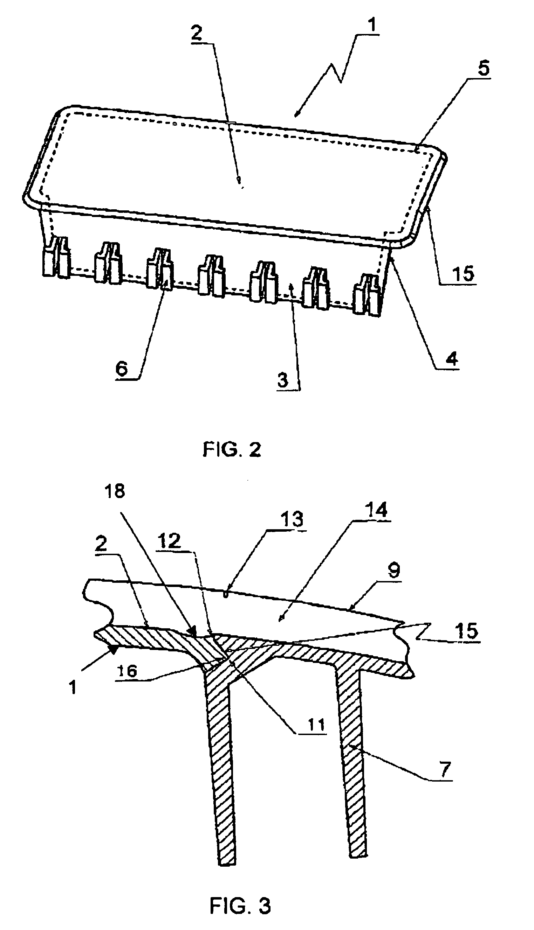

Die Fig. 2 zeigt eine dreidimensionale Darstellung einer typischen Airbagabdeckung 1 für eine Instrumententafel als Einzelbauteil. In dieser Darstellung ist die Konturgeometrie 15 des Deckels 2 zu erkennen. Das Scharnierelement 3 weist insgesamt sieben Ankerprofile 6 auf, die als in Längsrichtung geteilte T-Profile ausgeführt sind. Mit der gestrichelten Linie ist die Einlagerung eines Splitterschutzes 5 angedeutet, der die gesamte Airbagabdeckung 1 mit Scharnierelement 3 und Deckel 2 umfasst. Bei einer besonderen Ausführungsform der Airbagabdeckung 1, bei der ein nanostrukturierter Kunststoff eingesetzt wird, kann auf die Einlagerung des Splitterschutzes verzichtet werden. Diese Ausgestaltung ist jedoch nicht Gegenstand dieser Zeichnung.

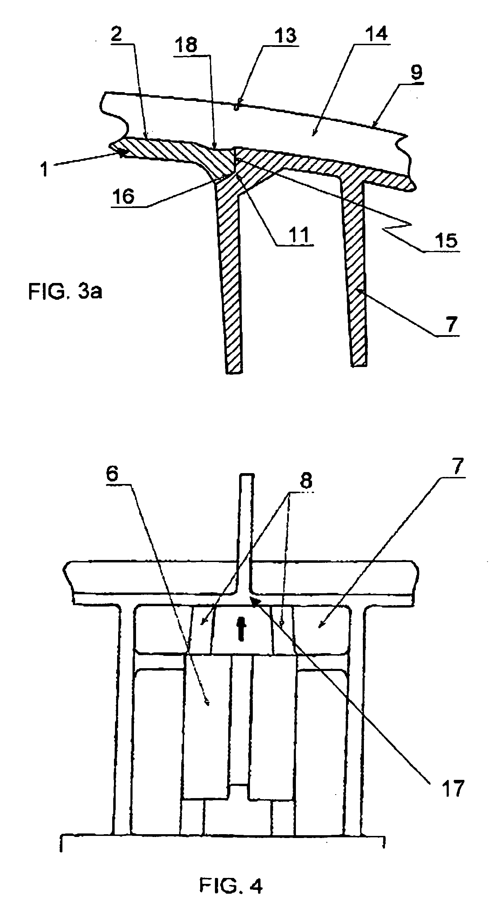

In den Fig. 3 und 4 sind insbesondere die Maßnahmen detailliert aufgeführt, die ein kontrolliertes Öffnen der Airbagabdeckung 1 ermöglichen. So zeigt die Fig. 3 den Querschnitt eines Ausschnitts aus einer Innenraumverkleidung (Instrumententafel) mit Airbagabdeckung 1, Instrumententafelträger 7, Schaumschicht 14 und Formhaut 9. In diesem Ausschnitt ist insbesondere die Konturgeometrie 15 des Airbagdeckels 2 verdeutlicht, wobei die Konturgeometrie 15 die Profilnase 16 umfasst, die passgenau in das Hohlprofil 11 der Öffnung des Instrumententafelträgers 7 eingelagert ist und in ihrem oberen Bereich einen in Richtung Schaumschicht 14 weisenden Profilhöcker 12 als Öffnungshilfe aufweist. Im Bereich der Formhaut 9 ist auf Höhe des Profilhöckers 12 eine Verschwächungslinie 13 zu erkennen. Profilhöcker 12 und Verschwächungslinie 13 wirken dahin, dass Schaum 14 und Formhaut 9 beim Öffnen des Airbags 10 definiert aufreißen.

Die Figur 3a zeigt ein alternatives Profil für die Konturgeometrie 15 des Airbagdeckels 2. In diesem Fall wird dem Öffnen des Deckels 2 durch den Träger 7 wenig oder gar keine Kraft mehr entgegengesetzt. Üblicherweise variiert in der Praxis die Konturgeometrie 15 zwischen den beiden in den Figuren 3 und 3a gezeigten Extremen. So wird je nach Bedarf eine mehr oder weniger starke Profilnase 16 ausgebildet oder auch in Bereichen, in denen das Öffnen des Deckels initiiert werden soll, ganz auf eine Profilnase 16 verzichtet, wie es in der Figur 3a angedeutet wird.

In der Fig. 4 ist ein einzelnes Ankerprofil 6 dargestellt, dass formschlüssig zu einer Haltelasche 8 im Bereich des Instrumententafelträgers 7 angeordnet ist und mit dieser in einer Wirkverbindung steht. In dieser Abbildung ist zu erkennen, dass die beiden Rippen der Haltelasche 8, die als Führung und Halterung für das Ankerprofil 6 gedacht sind, nach oben keilförmig in einem spitzen Winkel zusammenlaufen. Das Ankerprofil 6 selber ist als in Längsrichtung geteiltes T-Profil ausgeführt. Beide Maßnahmen dienen dazu, einen Bereich zu schaffen, in dem beim Öffnen der Airbagabdeckung 1 Energie abgebaut werden kann, wodurch das Ausmaß der Zerstörung des Instrumententafelträgers 7 im Öffnungsfall reduziert werden und gleichzeitig der Schutz der Insassen weiter erhöht werden kann. Der Pfeil in Richtung Anschlag 17 zeigt den Weg an, den das Ankerprofil 6 beim Öffnen des Airbags in einer Hubbewegung der Airbagabdeckung in Richtung Fahrzeuginneres zurücklegt.

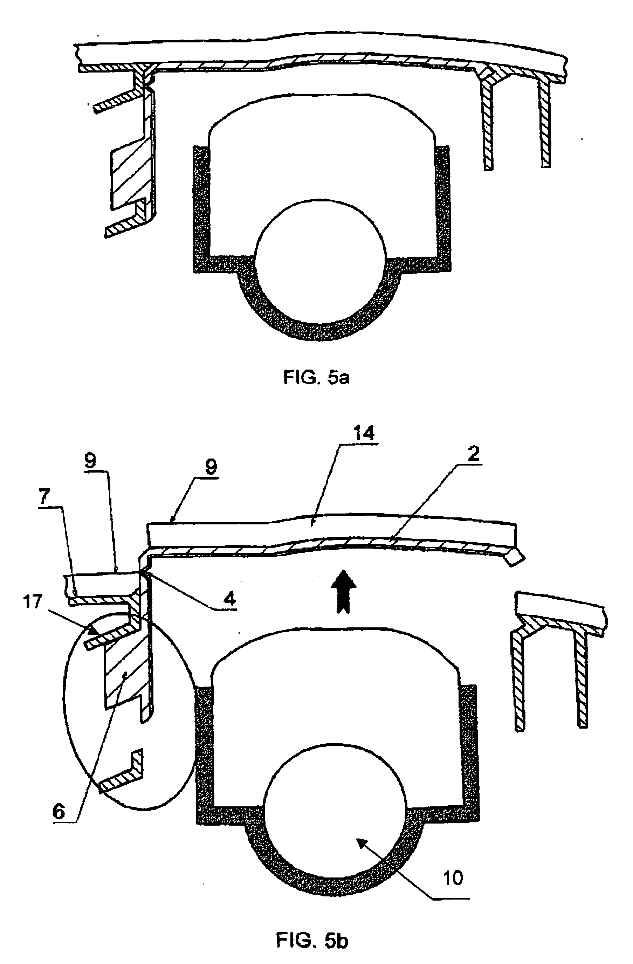

Die Fig. 5a bis 5c zeigen Querschnitte durch die Instrumententafel, die den Öffnungsmechanismus der erfindungsgemäßen Airbagabdeckung zu unterschiedlichen Öffnungszeitpunkten schematisch wiedergeben.

So ist in der Fig. 5a die geschlossene Airbagabdeckung in Analogie zur Fig. 1 zu erkennen. Bei der Darstellung der Fig. 5a wurde auf die Bezugszeichen verzichtet, die der Figur 1 entnommen werden können.

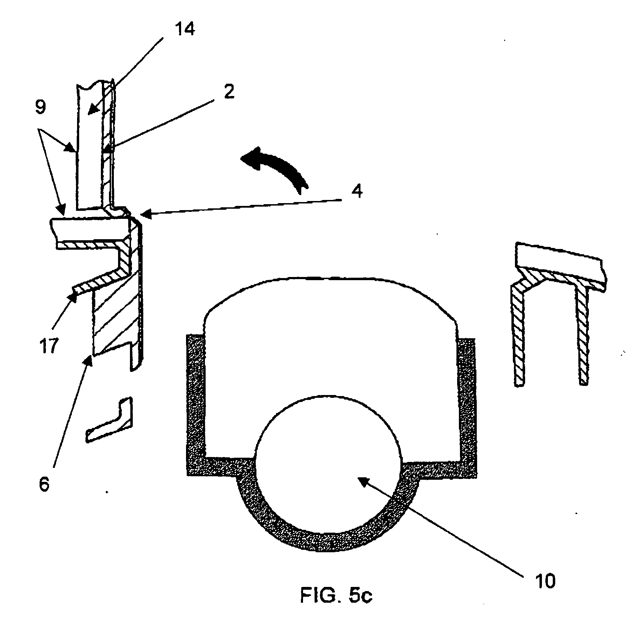

In der Fig. 5b hat der sich entfaltende Airbag die Abdeckung 1 aufgebrochen und mitsamt Schaum 14 und Formhaut 9 in einer Hubbewegung in Richtung Fahrzeuginneres verschoben. Dabei hat das Ankerprofil 6 den Anschlag 17 innerhalb der Haltelasche 8 im Bereich des Instrumententafelträgers 7 erreicht, wodurch die weitere Hubbewegung des Deckels 2 blockiert wird. Zu diesem Zeitpunkt befindet sich die Sollbruchkerbe 4 auf Höhe der Formhaut 9 der Instrumententafel 7 und kann seine Wirkung als Drehachse für die Airbagabdeckung 1 entfalten, deren Deckel 2 nun aufklappt und den Weg für den Airbag 10 freigibt, was in der Figur 5c wiedergegeben ist.

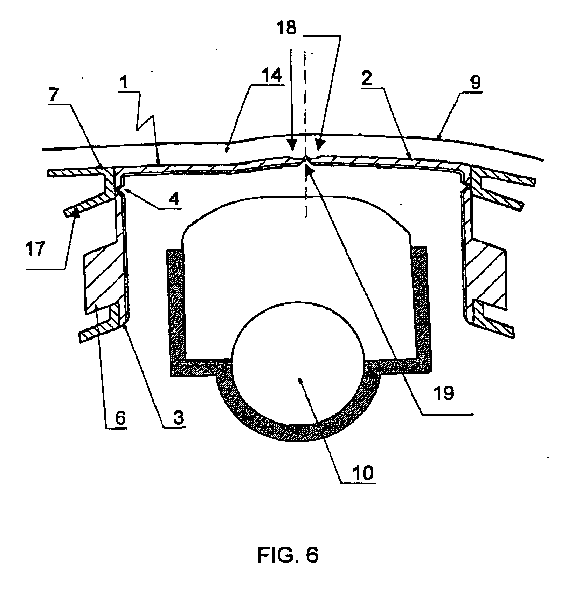

Die Figur 6 zeigt eine Ausführungsform für ein beidseitiges Öffnen der erfindungsgemäßen Airbagabdeckung 1. Dabei ist in der Mitte des Deckels 2 auf der dem Airbag 10 zugewandten Seite eine Sollbruchlinie 19 zu erkennen, die den Deckel 2 teilt. Diese Sollbruchlinie 19 wird vorzugsweise bereits beim Gießen der Airbagabdeckung eingeführt. Der Splitterschutz 5 ist im Bereich der Sollbruchlinie 19 unterbrochen, so dass ein Aufklappen der beiden Deckelflügel ermöglicht wird. Auf der der Sollbruchlinie 19 gegenüberliegenden Seite des Trägers 7 sind zwei Profilwannen 18 zu erkennen, die aufgrund der verbesserten Anbindung des Schaums an der vergrößerten Oberfläche einen zusätzlichen Splitterschutz beim Aufreißen des Deckels 2 entlang der Sollbruchlinie 19 bewirken. Die Airbagabdeckung 1 weist auf zwei gegenüberliegenden Seiten jeweils ein Scharnierelement 3 auf, das die bereits im Zusammenhang mit der Figur 1 beschriebenen Merkmale besitzt. Auch bei dieser Ausführungsform wird die Konturgeometrie 15 den erforderlichen Kraftverhältnissen beim Öffnen angepasst und es sind unterschiedliche Profile des Deckelrandes bzw. der Airbagöffnung vorgesehen.

Auch wenn in den Beispielen überwiegend Ausschnitte aus Instrumententafeln dargestellt sind, so kann das Erfindungsprinzip jedoch auf jede Art von Innenraumverkleidung mit integriertem Airbag angewandt werden, was nicht zuletzt auch in den entsprechend formulierten Patentansprüchen zum Ausdruck gebracht wird.

### Bezugszeichenliste

- 1: Airbagabdeckung
- 2: Deckel
- 3: Scharnierelement
- 4: Sollbruchkerbe
- 5: Splitterschutz
- 6: Ankerprofil
- 7: Träger (Innenraumverkleidung, Instrumententafel)
- 8: Haltelasche
- 9: Formhaut
- 10: Airbag
- 11: Hohlprofil
- 12: Profilhöcker
- 13: Schwächungslinie
- 14: Schaum
- 15: Konturgeometrie
- 16: Profilnase
- 17: Anschlag (für Ankerprofil)
- 18: Profilwanne
- 19: Sollbruchlinie

## Patentansprüche

1. Innenraumverkleidung mit einer in einen Träger (7) integrierten einteiligen Airbagabdeckung (1), wobei die Airbagabdeckung (1) und der Träger (7) für die Innenraumverkleidung aus jeweils antagonistischen Polymermaterialien gefertigt sind, die untereinander keine Haftverbindung eingehen, wobei
die Airbagabdeckung (1) einen Deckel (2) mit einer die Öffnungskraft kontrollierenden Konturgeometrie (15) umfasst, wobei die Konturgeometrie (15) des Deckels (2) Vorrichtungen zur Kontrolle und Einstellung des öffnungskraftwiderstandes des Deckels (2) sowie zur Unterstützung des definierten Aufreißens des Deckels (2) aufweist,
**dadurch gekennzeichnet, dass** die Konturgeometrie (15) des Deckels (2) eine zu einer V-förmigen Nut in der Airbagöffnung eines Trägers (7) für die Innenraumverkleidung passgenaue Profilnase (16) aufweist, wobei die Konturgeometrie (15) des Deckels (2) einen in eine zwischen Träger (7) und Formhaut (9) angeordnete Schaumschicht (14) weisenden Profilhöcker (12) aufweist und im Bereich des Deckelrandes eine Profilwanne (18) aufweist.

2. Innenraumverkleidung nach Anspruch 1,
**dadurch gekennzeichnet, dass** das Polymermaterial für die Airbagabdeckung (1) einen höheren Schmelzpunkt aufweist als das Polymermaterial für den Träger (7) für die Innenraumverkleidung.

3. Innenraumverkleidung nach Anspruch 1,
**dadurch gekennzeichnet, dass** das Material für die Airbagabdeckung (1) ausgewählt ist aus der Gruppe Polybutylenterephthalat (PBT), Polyoxymethylen (POM), Polyethylenterephthalat (PET), Polycarbonat (PC), Acrylnitril-Butadien-Styrol (ABS) und Polyamid (PA6) umfasst und das Material für den Träger (7) der Innenraumverkleidung Polypropylen (PP) und Polyoxymethylen (POM) umfasst.

4. Innenraumverkleidung nach einem der Ansprüche 1 bis 3,
**dadurch gekennzeichnet, dass** die Polymermaterialien mit Fasern, bevorzugt Glasfasern, verstärkt sind.

5. Innenraumverkleidung nach einem der Ansprüche 1 bis 4,
**dadurch gekennzeichnet, dass** der Deckel (2) eine genarbte Oberfläche aufweist.

6. Innenraumverkleidung nach einem der Ansprüche 1 bis 5,
**dadurch gekennzeichnet, dass** die Airbagabdeckung (1) mindestens ein Scharnierelement (3) mit einer als Drehachse für den Deckel (2) vorgesehenen Sollbruchkerbe (4) umfasst.

7. Innenraumverkleidung nach Anspruch 6,
**dadurch gekennzeichnet, dass** das mindestens eine Scharnierelement (3) Ankerprofile (6) aufweist, die in einer Wirkverbindung stehen mit in den Träger (7) eingelassenen und vertikal zur Oberfläche der Innenraumverkleidung in Richtung Airbag ausgerichteten Haltelaschen (8), wobei die Haltelaschen (8) als Führung und Halterung für die Ankerprofile (6) vorgesehen sind.

8. Innenraumverkleidung nach Anspruch 6 oder 7,
**dadurch gekennzeichnet, dass** die Airbagabdeckung (1) mit dem mindestens einen Scharnierelement (3) beim Entfalten des Airbags (10) um den Betrag, mit dem die Haltelaschen (8) die Ankerprofile (6) des Scharnierelements (3) aufnehmen können, in Richtung Fahrzeuginneres verschiebbar ist.

9. Innenraumverkleidung nach einem der Ansprüche 6 bis 8,
**dadurch gekennzeichnet, dass** der Deckel (2) nach dem Verschieben der Airbagabdeckung (1) um die als Drehachse fungierende Sollbruchkerbe (4) aufklappbar ist.

10. Innenraumverkleidung nach einem der Ansprüche 1 bis 9,
**dadurch gekennzeichnet, dass** in die Airbagabdeckung (1) ein Splitterschutz (5) in Form eines textilen Gewebe, eines Kunststoffgewebes oder eines Bleches eingelagert ist.

11. Innenraumverkleidung nach einem der Ansprüche 1 bis 15,
**dadurch gekennzeichnet, dass** die Airbagabdeckung (1) aus einem eine Nanostruktur aufweisenden Kunststoff besteht.

12. Innenraumverkleidung nach einem der Ansprüche 6 bis 11,
**dadurch gekennzeichnet, dass** die Ankerprofile (6) als in Längsrichtung geteilte T-Profile ausgebildet sind.

13. Innenraumverkleidung nach einem der Ansprüche 6 bis 12,
**dadurch gekennzeichnet, dass** die geteilten T-Profile durch zwischen den Teilprofilen verlaufene Querrippen verstärkt sind.

14. Innenraumverkleidung nach einem der Ansprüche 6 bis 13,
**dadurch gekennzeichnet, dass** die Haltelaschen (8) jeweils durch zwei vertikal zur Oberfläche der Innenraumverkleidung verlaufende Rippen im Träger (7) gebildet werden, wobei die Rippen an einem Anschlag für das Ankerprofil (6) enden und sich dabei in einem spitzen Winkel unter Verengung der Führung für das Ankerprofil (6) einander leicht annähern.

15. Verfahren zur Herstellung einer Innenraumverkleidung nach einem der Ansprüche 1 bis 14, mit einer integrierten einteiligen Airbagabdeckung (1), wobei das Verfahren die Schritte umfasst:
a) Spritzgießen der einteiligen Airbagabdeckung (1);
b) Einlegen der Airbagabdeckung (1) in eine Spritzform für einen Träger (7) für die Innenraumverkleidung;
c) Umspritzen der Airbagabdeckung (1) mit dem Träger (7) für die Innenraumverkleidung;
d) Hinterschäumen einer Formhaut (9) und Verbinden der Formhaut (9) über den Schaum (14) mit dem Träger (7) und der integrierten Airbagabdeckung (1).

## Claims

1. An interior lining with a one-piece airbag cover (1) integrated in a carrier (7), wherein the airbag cover (1) and the carrier (7) for the interior lining are produced from mutually incompatible polymer materials which do not form an adhesive bond with each other, wherein the airbag cover (1) comprises a lid (2) with a contour geometry (15) controlling the opening force, wherein the contour geometry (15) of the lid (2) has apparatus for controlling and setting the opening force resistance of the lid (2) and for assisting the defined tearing of the lid (2), **characterized in that** the contour geometry (15) of the lid (2) has a profile projection (16) precisely adapted to a V-shaped groove in the airbag opening of a carrier (7) for the interior lining, wherein the contour geometry (15) of the lid (2) has a profile hump (12) directed into a foam layer (14) arranged between the carrier (7) and the moulded skin (9) and has a profile hollow (18) in the region of the edge of the lid.

2. An interior lining according to claim 1, **characterized in that** the polymer material for the airbag cover (1) has a higher melting point than the polymer material for the carrier (7) for the interior lining.

3. An interior lining according to claim 1, **characterized in that** the material for the airbag cover (1) is selected from the group [which] comprises polybutylene terephthalate (PBT), polyoxymethylene (POM), polyethylene terephthalate (PET), polycarbonate (PC), acrylonitrile butadiene styrene (ABS) and polyamide (PA6), and the material for the carrier (7) of the interior lining comprises polypropylene (PP) and polyoxymethylene (POM).

4. An interior lining according to any one of claims 1 to 3, **characterized in that** the polymer materials are reinforced with fibres, preferably glass fibres.

5. An interior lining according to any one of claims 1 to 4, **characterized in that** the lid (2) has a grained surface.

6. An interior lining according to any one of claims 1 to 5, **characterized in that** the airbag cover (1) comprises at least one hinge element (3) with a pre-determined breaking notch (4) provided as an axis of rotation for the lid (2).

7. An interior lining according to claim 6, **characterized in that** at least one hinge element (3) has anchor profiles (6) which are operatively connected to holding tabs (8) sunk into the carrier (7) and orientated at a right angle to the surface of the interior lining in the direction of the airbag, wherein the holding tabs (8) are provided as a guidance and retention for the anchor profiles (6).

8. An interior lining according to claim 6 or 7, **characterized in that** the airbag cover (1) with the at least one hinge element (3) is displaceable in the direction towards the interior of the vehicle upon the opening of the airbag (10) by the amount with which the holding tabs (8) can receive the anchor profiles (6) of the hinge element (3).

9. An interior lining according to any one of claims 6 to 8, **characterized in that** the lid (2) is capable of being folded up after the displacement of the airbag cover (1) about the pre-determined breaking notch (4) acting as the axis of rotation.

10. An interior lining according to any one of claims 1 to 9, **characterized in that** a splinter protection means (5) in the form of a textile fabric, a plastics material fabric or a metal sheet is embedded in the airbag cover (1).

11. An interior lining according to any one of claims 1 to 15 [*sic*], **characterized in that** the airbag cover (1) consists of a plastics material having a nanostructure.

12. An interior lining according to any one of claims 6 to 11, **characterized in that** the anchor profiles (6) are designed in the form of T-profiles divided in the longitudinal direction.

13. An interior lining according to any one of claims 6 to 12, **characterized in that** the divided T-profiles are reinforced by transverse ribs extend[ing] between the profile parts.

14. An interior lining according to any one of claims 6 to 13, **characterized in that** the holding tabs (8) are formed in each case by two ribs - extending at a right angle to the surface of the interior lining - in the carrier (7), wherein the ribs terminate at a stop for the anchor profile (6) and in this case converge slightly at an acute angle whilst constricting the guidance for the anchor profile (6).

15. A method of producing an interior lining according to any one of claims 1 to 14, with an integrated one-piece airbag cover (1), wherein the method comprises the steps:
a) injection-moulding the one-piece airbag cover (1);
b) inserting the airbag cover (1) into an injection mould for a carrier (7) for the interior lining;
c) injecting around the airbag cover (1) with the carrier (7) for the interior lining;
d) back-foaming a moulded skin (9) and joining the moulded skin (9) to the carrier (7) and the integrated airbag cover (1) by way of the foam (14).

## Revendications

1. Revêtement interne comportant un recouvrement d'airbag (1) monobloc intégré dans un support (7), le recouvrement d'airbag (1) et le support (7) du revêtement interne étant respectivement réalisés en des matériaux polymères antagonistes ne donnant pas lieu à des liaisons par adhérence entre eux,
le recouvrement d'airbag (1) comportant un couvercle (2) dont les contours (15) présentent une géométrie permettant de contrôler la force d'ouverture, la géométrie des contours (15) du couvercle (2) comportant des dispositifs pour contrôler et régler la résistance de la force d'ouverture du couvercle (2) ainsi que pour assister l'arrachement du couvercle (2),
**caractérisé en ce que**
la géométrie des contours (15) du couvercle (2) comporte un nez profilé (16) exactement adapté à une rainure en forme de V réalisée dans l'ouverture d'airbag du support (7) du revêtement interne, la géométrie des contours (15) du couvercle (2) comportant un bossage profilé (12) comportant une couche de mousse (14) disposée entre le support (7) et la peau de moulage (9) et présentant dans la zone du bord du couvercle une cuvette profilée (18).

2. Revêtement interne conforme à la revendication 1,
**caractérisé en ce que**
le matériau polymère du recouvrement d'airbag (1) présente un point de fusion supérieur à celui du matériau polymère du support (7) pour le revêtement interne.

3. Revêtement interne conforme à la revendication 1,
**caractérisé en ce que**
le matériau du recouvrement d'airbag (1) est choisi dans le groupe formé par le polybutylènetérephthalate (PBT), le polyoxyméthylène (POM), le polyéthylènetérephthalate (PET), le polycarbonate (PC), l'acrylonitrile-butadiène-styrène (ABS) et le polyamide (PA6), et le matériau du support (7) du revêtement interne renferme du polypropylène (PP) et du polyoxyméthylène (POM).

4. Revêtement interne conforme à l'une des revendications 1 à 3,
**caractérisé en ce que**
les matériaux polymères sont renforcés par des fibres, de préférence par des fibres de verre.

5. Revêtement interne conforme à l'une des revendications 1 à 4,
**caractérisé en ce que**
le couvercle (2) comporte une surface grainée.

6. Revêtement interne conforme à l'une des revendications 1 à 5,
**caractérisé en ce que**
le recouvrement d'airbag (1) comporte au moins un élément charnière (3) équipé d'une entaille de rupture de consigne (4) constituant l'axe de rotation du couvercle (2).

7. Revêtement interne conforme à la revendication 6,
**caractérisé en ce que**
l'élément charnière (3) comporte des profilés d'ancrage (6) qui sont en liaison fonctionnelle avec les languettes de retenue (8) insérées dans le support (7) et dirigées perpendiculairement à la surface du revêtement interne en direction de l'airbag, ces languettes de retenue (8) constituant des éléments de guidage et de maintien des profilés d'ancrage (6).

8. Revêtement interne conforme à la revendication 6 ou 7,
**caractérisé en ce que**
le recouvrement d'airbag (1) peut se déplacer en translation en direction dé l'intérieur du véhicule avec l'élément de charnière (3) en présence d'un déploiement de l'airbag (10) de la longueur permettant aux languettes de retenue (8) de recevoir les profilés d'ancrage (6) de l'élément charnière (3).

9. Revêtement interne conforme à l'une des revendications 6 à 8,
**caractérisé en ce que**
après déplacement en translation du recouvrement d'airbag (1), le couvercle (2) peut être ouvert, autour de l'entaille de rupture de consigne (4) faisant office d'axe de rotation.

10. Revêtement interne conforme à l'une des revendications 1 à 9,
**caractérisé en ce que**
dans le recouvrement d'airbag (1) est inséré un élément de protection anti-éclats (5) réalisé sous la forme d'un tissu textile, d'un tissu synthétique ou d'une tôle.

11. Revêtement interne conforme à l'une des revendications 1 à 15,
**caractérisé en ce que**
le recouvrement d'airbag (1) est réalisé en un matériau synthétique ayant une nanostructure.

12. Revêtement interne conforme à l'une des revendications 6 à 11,
**caractérisé en ce que**
les profilés d'ancrage (6) sont réalisés sous la forme de profilés en T fendus en direction longitudinale.

13. Revêtement interne conforme à l'une des revendications 6 à 12,
**caractérisé en ce que**
les profilés en T fendus sont renforcés par des nervures transversales s'étendant entre les profilés partiels.

14. Revêtement interne conforme à l'une des revendications 6 à 13,
**caractérisé en ce que**
les languettes de retenue (8) sont respectivement formées dans le support (7) par deux nervures dirigées perpendiculairement à la surface du revêtement interne, ces nervures se terminant au niveau d'une butée pour le profilé d'ancrage (6) et se rapprochant légèrement l'une de l'autre à ce niveau avec un angle aigu en resserrant le guidage pour le profilé d'ancrage (6).

15. Procédé d'obtention d'un revêtement interne conforme à l'une des revendications 1 à 14, avec un recouvrement d'airbag (1) monobloc intégrée, ce procédé comprenant les étapes consistant â :
a) mouler par injection le recouvrement d'airbag monobloc (1),
b) positionner le recouvrement d'airbag (1) dans un moule d'injection du support (7) du revêtement interne,
c) mouler par injection le support (7) du revêtement interne autour du recouvrement d'airbag (1),
d) former par moussage en arrière, une peau de moulage (9) et relier la peau de moulage (9) au-dessus de la mousse (14) avec le support (7) et le recouvrement d'airbag (1) intégré.
